# FASCICULE DE BREVET EUROPEEN

(11) **EP 0 607 089 B1**
(45) Date de publication et mention de la délivrance du brevet: **08.04.1998**
(21) Numéro de dépôt: 94400088.4
(22) Date de dépôt: 13.01.1994
(51) Int. Cl.: G01F 1/06, F16C 17/03

(54) **Palier de turbine pour compteur de liquide**
Turbinenlager für Flüssigkeitszähler
Turbine bearing for liquid counter

(30) Priorité: 14.01.1993 FR 9300383
(43) Date de publication de la demande: 20.07.1994
(73) Titulaire: SCHLUMBERGER INDUSTRIES S.A., 92120 Montrouge (FR)
(72) Inventeur: Brochette, Hervé, F-67110 Gumbrechtshoffen (FR)

(56) Documents cités:
- CH-A- 354 952
- DE-A- 1 939 160
- DE-U- 8 616 126
- GB-A- 1 169 791
- GB-A- 1 175 470

## Description

La présente invention a pour objet une turbine pour compteur de fluide et un compteur de fluide comportant une telle turbine. Elle s'applique notamment aux cas où le fluide dont on veut estimer le volume écoulé est chargé, c'est à dire qu'il comprend des particules à granulométrie variable en suspension (par exemple, des eaux d'irrigation chargées en sable et en boue ou eau de chauffage chargée de particules métalliques).

La présente invention s'applique indifférement aux compteurs du type monojet ou du type multijet. La description suivante sera donnée uniquement pour un compteur de type monojet mais on comprend qu'elle est immédiatement transposable au cas multijet.

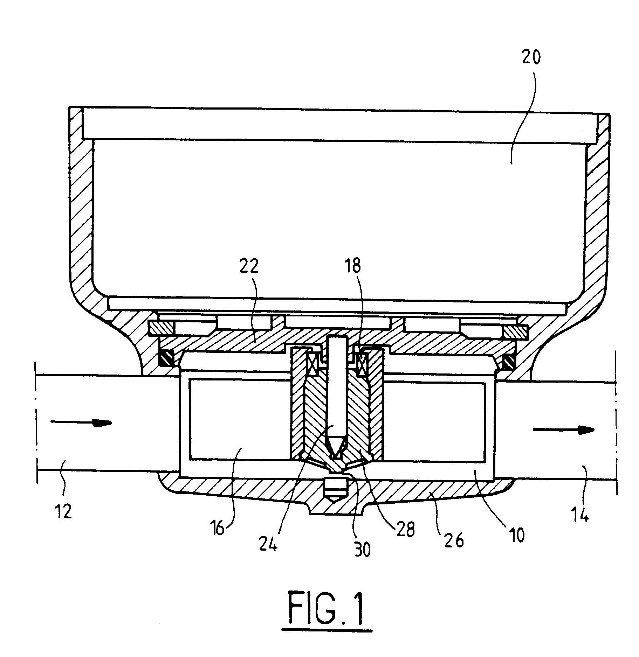

Sur la figure 1, on a représenté de manière schématique un compteur de fluide monojet. Le fluide en écoulement dont on veut mesurer le volume écoulé pénètre dans une chambre de mesure 10 par une conduite d'entrée 12 et en ressort par une conduite de sortie 14 après avoir mis une turbine 16 en rotation. Le nombre de tours effectué par la turbine est porportionnel au volume écoulé. Un aimant 18 est solidaire de la turbine et entraîne un système magnétique de comptage non représenté et contenu dans un totalisateur 20. Le totalisateur 20 est séparé de manière étanche de la chambre de mesure 10 par un plateau 22. La face du plateau 22 dirigée vers la chambre de mesure 10 supporte un pivôt 24 perpendiculaire à la direction d'écoulement du fluide. Ce pivôt 24 définit l'axe de rotation de la turbine. Le pivôt peut aussi de manière équivalente être fixé sur la bâche 26 de la chambre de mesure.

La turbine 16 comprend un palier 28, pièce centrale supportant le pivôt 24 lors de la rotation de la turbine.

A bas régime d'écoulement dans l'exemple représenté sur la figure 1, la turbine repose sur la bâche par l'intermédiaire d'un téton 30 placé à l'extrémité extérieure du palier. Lorsque le régime d'écoulement augmente, la turbine s'élève et le fond de l'évidement central du palier vient buter sur la pointe du pivôt.

Lorsque le fluide en écoulement est chargé, par exemple lorsque l'on veut effectuer un comptage d'eau d'irrigation ou eau de chauffage, les compteurs à turbine de l'art antérieur se bloquent rapidement. En effet, les particules fines et particules métalliques en suspension dans le fluide, sable, boue, argil , s'accumulent entre le palier et le pivôt, provoquant un encrassement.

Cet encrassement favorise l'accumulation de particules qui ne tardent pas à bloquer complètement la rotation de la turbine autour du pivôt.

Il arrive aussi que ces "grosses" particules (d'un diamètre pouvant aller de 0,05 à plus d'1 mm), entraînées par le tourbillon de fluide créé entre le palier et le pivôt viennent directement bloquer la rotation. De plus, l'encrassement provoque une usure des axes et une perte de sensibilité du compteur.

Le brevet français n° 2056913 préconise de pratiquer des rainures axiales dans l'évidement du palier à l'intérieur duquel vient se positionner le pivôt. Ces rainures sont séparées par des nervures de plus faible largeur que les rainures et dont les angles sont arrondis. La présence des nervures permet de diminuer la surface de frottement entre le pivôt et le palier, ce qui augmente la sensibilité. Par ailleurs, ces rainures permettent aussi un écoulement axial du fluide et par conséquent l'élimination des impuretés qui risquent de détériorer le palier. De ce fait, l'encrassement est ralenti. Mais on constate qu'en pratique, un compteur muni d'un tel dispositif et utilisé pour le comptage d'eau d'irrigation ne fonctionne que pour quelques milliers de mètres cubes. Par conséquent, sa durée de vie avant blocage est de quelques semaines à quelques mois au plus. En effet, si les rainures permettent de ralentir le phénomène d'encrassement, celui-ci subsite néanmoins. Assez rapidement, les rainures se bouchent et le blocage survient.

La présente invention permet d'éviter, ou tout au moins de ralentir suffisament, le phénomène d'encrassement de manière à garantir une durée de vie de plusieurs années à un compteur utilisé dans des conditions sévères et par exemple pour le comptage d'eaux d'irrigation très chargées ou eau de chauffage.

A cette fin, l'invention consiste en une turbine pour compteur de fluide et comportant un palier possédant un évidement central apte à recevoir un pivôt. Ce palier comporte :
- à la périphérie de l'évidement central, des cannelures débouchantes séparées par des nervures,
- des passages axiaux distribués autour des cannelures, chaque passage coopérant avec au moins une cannelure de manière à favoriser un écoulement de fluide par ledit passage au détriment de son écoulement dans la cannelure.

Avantageusement, les cannelures possédant un diamètre hydraulique dh, les passages possèdent un diamètre hydraulique DH au moins égal à deux fois le diamètre hydraulique dh.
De manière préférée, DH est sensiblement égal à 2,4 fois dh.

De manière avantageuse, les passages axiaux sont distribués autour des cannelures au plus près de celles ci et de l'évidement central.

De façon avantageuse, les cannelures sont régulièrement espacées. Dans cette configuration, chaque passage est placé entre deux cannelures et coopère avec celles-ci.

Selon un mode de réalisation avantageux, les cannelures possédant une plus petite dimension radiale, chaque cannelure présentant une ouverture longitudinale, cette ouverture possède une largeur inférieure à la plus petite dimension radiale.

De manière avantageuse, chaque nervure possède une extrémité rentrante dans la cannelure adjacente.

Avantageusement, chaque nervure possède une surface de contact avec le pivôt concave.

Selon un mode de réalisation particulier, les cannelures et les nervures sont séparées des passages par des parois, et l'extrémité de ces parois est chanfreinée de manière à favoriser l'écoulement de fluide dans les passages.

La présente invention concerne aussi un compteur de fluide comportant une telle turbine.

L'invention sera mieux comprise à la lecture de la description qui suit donnée à titre illustratif et non limitatif en référence aux dessins annexés sur lesquels:
La figure 1 représente schématiquement un compteur de fluide conforme à l'art antérieur,
La figure 2 représente schématiquement un compteur de fluide conforme à l'invention,
La figure 3A représente schématiquement une vue de dessus d'un palier pour une turbine conforme à l'invention,
La figure 3B représente schématiquement une coupe selon l'axe BB de la vue de la figure 3A,
La figure 4 représente une vue partielle agrandie de la vue de la figure 3A.

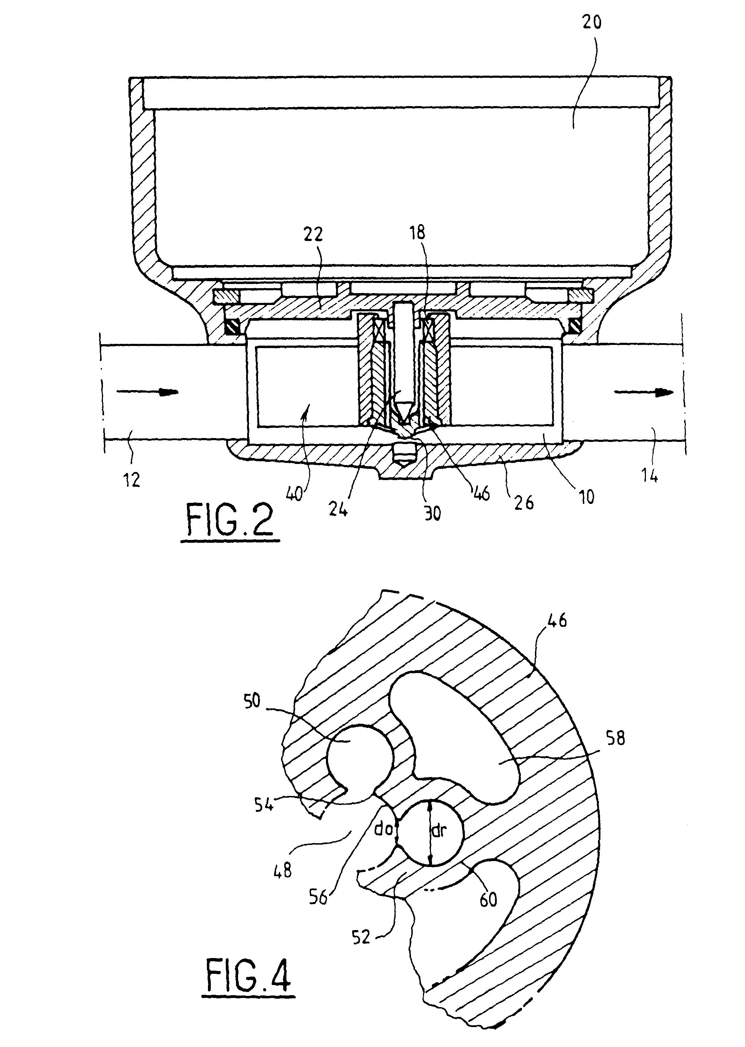

La figure 2 représente schématiquement un compteur de fluide conforme à l'invention. Les références identiques aux références de la figure 1 désignent les mêmes objets. Comme on l'a vu, le fluide pénètre dans la chambre de mesure 10 par la canalisation 12 et en ressort par la canalisation 14. La chambre de mesure est remplie de fluide en mouvement et l'écoulement entraîne la turbine 40 en rotation autour du pivot 24. Une circulation de fluide est aussi créée dans l'espace existant entre le pivot 24 et le palier 46. La turbine conforme à l'invention permet d'éviter que cette circulation de fluide entraîne un encrassement et un blocage de la rotation.

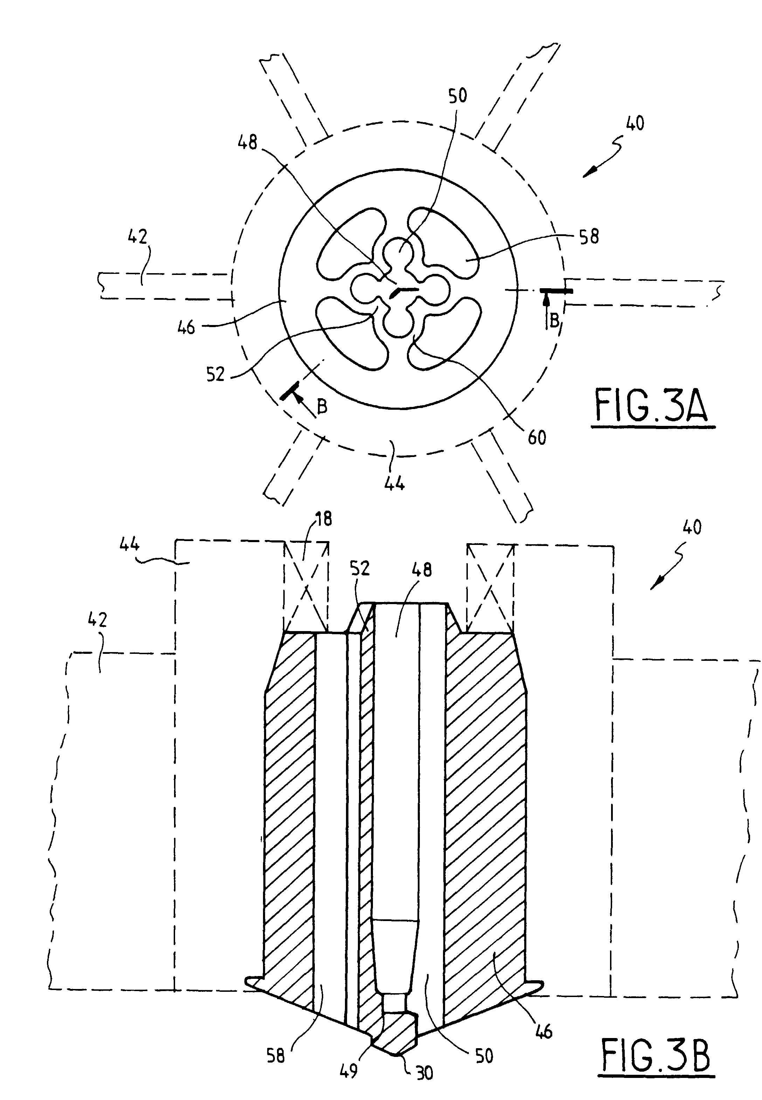

La figure 3A représente schématiquement une vue de dessus de la turbine 40.

La turbine 40 comporte une série de pales 42, six dans le cas de la figure 3A, mais on comprend que le nombre de pales peut être différent et dépend des spécifications envisagées. Les pales sont régulièrement réparties autour d'un moyeu 44 dans lequel est fixé un palier 46.

Dans cette réalisation, le moyeu sert aussi de support à l'aimant d'entrainement 18 en forme de couronne, comme on peut le voir sur la figure 3B. Le palier 46 va maintenant être décrit en référence aux figures 3A et 3B, cette dernière étant une vue en coupe de la turbine selon l'axe BB de la figure 3A.

Le palier 46 est dans cette réalisation une pièce cylindrique possédant un évidement central 48 apte à recevoir le pivôt 24. L'évidement est fermé par une butée 49 dont la forme extérieure en téton 30 permet la rotation de la turbine sur la bâche lors d'un écoulement à bas régime.

A la périphérie de l'évidement central 48, le palier 46 comporte des cannelures 50 axiales, débouchantes, et dans cette réalisation particulière sensiblement cylindriques. Ces cannelures peuvent présenter d'autres géométries, mais la forme cylindrique est la plus proche de la géométrie hydraulique. C'est à dire qu'elle est la plus proche de la forme prise par l'écoulement de fluide.

Les cannelures sont au nombre de quatre dans cette réalisation mais ce nombre n'est donné qu'à titre indicatif. Le nombre de cannelures dépend des diamètres de l'évidement central et du palier. Plus ce dernier sera élevé, plus la place disponible pour les cannelures sera importante. Les cannelures 50 sont régulièrement réparties autour de l'axe de rotation de la turbine et sont séparées par des nervures 52.

La figure 4 représente schématiquement une vue partielle agrandie de la figure 3A. Sur cette figure, on peut voir que dans cet exemple de réalisation, chaque nervure possède une extrémité rentrante 54 dans la cannelure adjacente. L'espace entre deux extrémités rentrantes en vis à vis de deux nervures adjacentes forment une ouverture de la cannelure sur l'évidement 48. Cette ouverture présente une largeur do inférieure à la plus petite dimension radiale dr de la cannelure. La plus petite dimension radiale correspond au diamètre pour une cannelure cylindrique.

Comme on peut encore le voir sur la figure 4, les nervures 52 possèdent une surface de contact 56 avec le pivôt concave. De cette manière, les nervures peuvent supporter sans déformation les pressions très élevées survenant entre le pivôt et le palier.

De retour aux figures 3A et 3B, on peut voir que le palier 46 comporte des passages axiaux 58 distribués autour des cannelures 50. Ces passages 58 coopèrent avec les cannelures de manière à favoriser un écoulement de fluide par ces passages au détriment d'un écoulement par les cannelures.

Avantageusement, pour obtenir cette coopération entre un passage et une cannelure, les passages possèdent un diamètre hydraulique DH au moins égal à deux fois le diamètre hydraulique dh d'un cannelure. Le diamètre hydraulique définit un écoulement dans une section quelconque. D'une manière générale, le diamètre hydraulique D d'une conduite s'obtient par la formule: D = 4 S / P où S est égal à la section de la conduite dans lequel le fluide s'écoule, et P est le périmètre de cette section.

Le diamètre hydraulique DH d'un passage peut par exemple être sensiblement égal à 2,4 fois le diamètre hydraulique dh d'une cannelure.

Dans le mode de réalisation représenté sur la figure 3A, le diamètre hydraulique des cannelures 50 est égal au diamètre des cannelures puisque celles ci sont cylindriques.

Dans l'exemple de réalisation représenté sur la figure 3A, chaque passage 58 coopère avec deux cannelures. Les passages sont donc répartis sur un diamètre du palier et chaque passage est placé entre deux cannelures.

Les passages sont distribués autour des cannelures au plus près de celles ci et de l'évidement central. Pour cela, la forme des passages 58 est telle que la paroi de séparation 60 entre les cannelures et les passages soit la plus mince possible; Cette paroi 60 doit toutefois être suffisament épaisse pour ne pas se déformer sous la pression du fluide en circulation.

Comme on peut le voir sur la figure 3B, l'extrémité supérieure de cette paroi 60 est chanfreinée de manière à favoriser un écoulement dans le passage 58 plutôt que dans la cannelure 50. L'angle du chanfrein peut par exemple être égal à 15°.

La configuration du palier 46 de la turbine 40 permet d'évacuer la circulation de fluide créée entre le pivôt et le palier principalement par les passages 58. Ces passages sont suffisament larges pour éviter le dépôt et l'accumulation des particules en suspension dans le fluide qui sont entraînées dans la circulation. Une circulation résiduelle de fluide s'effectue par l'intermédiaire des cannelures 50, de manière bien plus faible que dans l'art antérieur et diminuant d'autant les risques de blocage par encrassement.

De plus, les "grosses" particules (de quelques 10^{e} de mm) sont entraînées dans les passages, évitant de cette manière qu'elles se fixent entre le palier et le pivôt.

On comprend que cette turbine peut fonctionner avec les compteurs monojets comme avec les compteurs multijets et dans différentes configurations. C'est ainsi que la description précédente est donnée pour un compteur ayant un pivôt fixé sur le plateau 22 mais est directement transposable au cas où le pivôt est fixé sur la bâche.

## Revendications

1. Turbine pour compteur de fluide comportant un palier (46) possédant un évidement central (48) apte à recevoir un pivôt (24), caractérisée en ce que ledit palier (46) comporte:
- à la périphérie de l'évidement central (48), des cannelures (50) débouchantes séparées par des nervures (52),
- des passages (58) axiaux distribués autour des cannelures (50), chaque passage coopérant avec au moins une cannelure de manière à favoriser un écoulement de fluide par ledit passage au détriment de son écoulement dans la cannelure.

2. Turbine selon la revendication 1 caractérisée en ce que, les cannelures (50) possédant un diamètre hydraulique dh, les passages possèdent un diamètre hydraulique DH au moins égal à deux fois le diamètre hydraulique dh.

3. Turbine selon la revendication 2 caractérisée en ce que DH est sensiblement égal à 2,4 fois dh.

4. Turbine selon la revendication 1 caractérisée en ce que les passages (58) sont distribués autour des cannelures (50) au plus près de celles ci et de l'évidement central (48).

5. Turbine selon la revendication 1 caractérisé en ce que, les cannelures (50) sont régulièrement espacées.

6. Turbine selon la revendication 5 caractérisée en ce que, chaque passage (58) est placé entre deux cannelures (50) de manière à coopérer avec celles-ci.

7. Turbine selon la revendication 1, caractérisée en ce que, les cannelures (50) possédant une plus petite dimension radiale, chaque cannelure (50) présentant une ouverture longitudinale, cette ouverture possède une largeur inférieure à la plus petite dimension radiale.

8. Turbine selon la revendication 1, caractérisée en ce que chaque nervure (52) possède une extrémité rentrante (54) dans la cannelure adjacente (50).

9. Turbine selon la revendication 1, caractérisée en ce que chaque nervure (52) possède une surface de contact (56) avec le pivot (24) concave.

10. Turbine selon la revendication 1, caractérisée en ce que les cannelures (50) et les nervures (52) étant séparées des passages (58) par des parois (60), l'extrémité de ces parois est chanfreinée de manière à favoriser l'écoulement de fluide dans les passages.

11. Compteur de fluide caractérisé en ce qu'il comporte une turbine selon l'une des revendications 1 à 10.

## Patentansprüche

1. Turbine für einen Flüssigkeitszähler, die ein Lager (46) mit einer zentralen Ausnehmung (48) aufweist, die zur Aufnahme eines Zapfens (24) geeignet ist, dadurch gekennzeichnet, daß das Lager (46) folgendes aufweist:
- Mündungsrillen (50) am Umfang der zentralen Ausnehmung (48), die durch Rippen (52) getrennt sind,
- axiale Durchgänge (58), die um die Rillen (50) angeordnet sind, wobei jeder Durchgang mit wenigstens einer Rille derart zusammenwirkt, daß ein Ablaufen der Flüssigkeit durch den Durchgang zuungunsten des Ablaufens in die Rille gefördert wird.

2. Turbine nach Anspruch 1, dadurch gekennzeichnet, daß dann, wenn die Rillen (50) einen Hydraulikdurchmesser dh aufweisen, die Durchgänge einen Hydraulikdurchmesser DH besitzen, der wenigstens gleich dem Zweifachen des Hydraulikdurchmessers dh ist.

3. Turbine nach Anspruch 2, dadurch gekennzeichnet, daß DH im wesentlichen gleich 2,4 mal dh ist.

4. Turbine nach Anspruch 1, dadurch gekennzeichnet, daß die Durchgänge (58) um die Rillen (50) so nahe wie möglich an diesen und an der zentralen Ausnehmung (48) angeordnet sind.

5. Turbine nach Anspruch 1, dadurch gekennzeichnet, daß die Rillen (50) in regelmäßigem Abstand angeordnet sind.

6. Turbine nach Anspruch 5, dadurch gekennzeichnet, daß jeder Durchgang (58) derart zwischen zwei Rillen (50) angeordnet ist, daß er mit diesen zusammenwirkt.

7. Turbine nach Anspruch 1, dadurch gekennzeichnet, daß dann, wenn die Rillen (50) eine kleinere radiale Abmessung besitzen, wobei jede Rille (50) eine Längsöffnung aufweist, diese Öffnung eine Breite besitzt, die kleiner als die kleinere radiale Ausdehnung ist.

8. Turbine nach Anspruch 1, dadurch gekennzeichnet, daß jede Rippe (52) ein einspringendes Ende (54) in der angrenzenden Rille (50) besitzt.

9. Turbine nach Anspruch 1, dadurch gekennzeichnet, daß jede Rippe (52) eine Kontaktfläche (56) mit dem konkaven Zapfen (24) besitzt.

10. Turbine nach Anspruch 1, dadurch gekennzeichnet, daß dann, wenn die Rillen (50) und die Rippen (52) durch Wände (60) von den Durchgängen (58) getrennt sind, das Ende dieser Wände derart abgeschrägt ist, daß das Ablaufen der Flüssigkeit in die Durchgänge gefördert wird.

11. Flüssigkeitszähler, dadurch gekennzeichnet, daß er eine Turbine nach einem der Ansprüche 1 bis 10 aufweist.

## Claims

1. An impeller for a fluid meter comprising a bearing (46) including a central recess (48) suitable for receiving a pivot (24), characterized in that said bearing (46) comprises:
- at the periphery of the central recess (48), open-ended flutes (50) being separated by ribs (52),
- axial passages (58) distributed around the flutes (50), each passage co-operating with at least one flute in such a manner as to facilitate a flow of fluid via said passage to the detriment of a flow of the fluid along the flute.

2. An impeller according to claim 1, characterized in that the flutes (50) having a hydraulic diameter dh, the passages have a hydraulic diameter DH that is not less than twice the hydraulic diameter dh.

3. An impeller according to claim 2, characterized in that DH is substantially equal to 2,4 times dh.

4. An impeller according to claim 1, characterized in that the passages (58) are distributed around the flutes (50) as close as possible thereto and to the central recess (48).

5. An impeller according to claim 1, characterized in that the flutes (50) are uniformly spaced.

6. An impeller according to claim 5, characterized in that each passage (58) is placed between two flutes (50) so as to co-operate therewith.

7. A impeller according to claim 1, characterized in that, the flutes (50) having a smallest radial dimension, each flute (50) having a longitudinal opening, said opening has a width that is less than said smallest radial dimension.

8. An impeller according to claim 1, characterized in that each rib (52) has an edge (54) that is re-entrant into the adjacent flute (50).

9. An impeller according to claim 1, characterized in that each rib (52) has a surface (56) contacting the concave pivot (24).

10. An impeller according to claim 1, characterized in that the flutes (50) and the ribs (52) being separated from the passages (58) by walls (60), the end of these walls is chamfered so as to encourage the flow of fluid along the passages.

11. A fluid meter characterized in that it includes an impeller according to any one of the claims I to 10.
